(19) Europäisches Patentamt
European Patent Office
Office européen des brevets

(11) **EP 2 881 758 A1**

(12) **EUROPEAN PATENT APPLICATION**
published in accordance with Art. 153(4) EPC

(43) Date of publication:
**10.06.2015 Bulletin 2015/24**

(21) Application number: **13826232.4**

(22) Date of filing: **21.06.2013**

(51) Int Cl.:
**G01S 19/27** (2010.01)          **G01S 19/25** (2010.01)
**G01S 19/42** (2010.01)

(86) International application number:
**PCT/JP2013/003885**

(87) International publication number:
**WO 2014/020818 (06.02.2014 Gazette 2014/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.07.2012   JP 2012169122
26.11.2012   JP 2012257121**

(71) Applicant: **Seiko Epson Corporation
Shinjuku-ku
Tokyo 163-0811 (JP)**

(72) Inventor: **MURAKI, Kiyotaka
Suwa-shi
Nagano 392-8502 (JP)**

(74) Representative: **Hoffmann Eitle
Patent- und Rechtsanwälte PartmbB
Arabellastraße 30
81925 München (DE)**

(54) **POSITION CALCULATION METHOD AND POSITION CALCULATOR**

(57)     The time to first fix in position calculation based on positioning satellite signals is to be reduced.

A position calculation apparatus 1 receives positioning support information superimposed on a quasi-zenith satellite signal transmitted by a quasi-zenith satellite 5 at the first position calculation without ephemerides, pre-dicts satellite orbits of GPS satellites 3 based on positions and velocities of the GPS satellites 3 contained in the positioning support information, and performs position calculation using the ephemerides estimated from the predicted satellite orbits.

FIG. 1

**Description**

Technical Field

This invention relates to a position calculation method of calculating a position using signals from positioning satellites etc.

Background Art

As a position calculation system using positioning signals from positioning satellites, a GPS (Global Positioning System) is widely known and built in a cell phone, a car navigation system, or the like as a position calculation apparatus. In the GPS, orbital information (ephemeris or almanac) superimposed on GPS satellite signals is acquired, the positions of the satellites are specified, and thereby, the position of the apparatus itself is calculated based on pseudo ranges.

At the first position calculation, the GPS does not retain the ephemerides, and it is necessary to acquire the ephemerides first. This takes several tens of seconds and the time to first fix (TTFF) increases.

There is a method of capturing satellites using an almanac, however, the almanac is only available for capturing the satellites, but not available for positioning due to a problem of accuracy. Nonetheless, if the almanac can be early acquired, the satellites can be early captured. Accordingly, in NPL 1, a technology of transmitting almanac information using L1-SAIF signals of quasi-zenith satellites (QZS) is proposed.

Citation List

Non Patent Literature

NPL 1: SAKAI Takayasu, Transmitting Orbital Parameters to Reduce Time to First Fix (TTFF) of GPS, IEICE TRANSACTIONS on Communications Vol. J91-B, No. 4, The Institute of Electronics, Information and Communication Engineers, April, 2008, pp. 479-486

Summary of Invention

Technical Problems

However, in the above described technology of NPL 1, in order to reduce the amount of data transmitted from the quasi-zenith satellites, difference information of the almanac is transmitted. Accordingly, a mechanism for storing a dedicated almanac as reference of difference at the terminal device side in advance is necessary. Further, the orbital information to be transmitted is an almanac, and only the time taken for capturing the satellites is reduced.

The invention has been made in view of the circumstances described above, and an object of the invention is to reduce the time to first fix in position calculation based on signals from positioning satellites.

Solution to Problems

A first aspect of the invention is directed to a position calculation method including receiving positioning support information containing at least information of a position and a velocity of a positioning satellite from an artificial satellite that transmits the positioning support information, calculating orbital information of the positioning satellite using the positioning support information, and calculating a position of a receiver using a signal from the positioning satellite and the orbital information.

As another aspect of the invention, the invention may be configured as a position calculation apparatus including a receiving unit that receives positioning support information containing at least information of a position and a velocity of a positioning satellite from an artificial satellite that transmits the positioning support information, an orbital information calculation unit that calculates orbital information of the positioning satellite using the positioning support information, and a position calculation unit that calculates a position using a signal from the positioning satellite and the orbital information.

As a second aspect of the invention, the invention may be configured as a position calculation method including receiving positioning support information containing at least information of a position and a velocity of a positioning satellite from a ground communication device that transmits the positioning support information, calculating orbital information of the positioning satellite using the positioning support information, and calculating a position of a receiver using a signal from the positioning satellite and the orbital information.

As another aspect of the invention, the invention may be configured as a position calculation apparatus including a receiving unit that receives positioning support information containing at least information of a position and a velocity of a positioning satellite from a ground communication device that transmits the positioning support information, an orbital information calculation unit that calculates orbital information of the positioning satellite using the positioning support information, and a position calculation unit that calculates a position using a signal from the positioning satellite and the orbital information.

According to the first aspect of the invention and the like, the positioning support information transmitted from the artificial satellite or the ground communication device is received, the orbital information of the positioning satellite is calculated using the received positioning support information, and the position is calculated using the signal from the positioning satellite and the calculated orbital information of the positioning satellite. That is, the orbital information of the positioning satellite is obtained by the positioning support information from the other artificial satellite or ground communication device than the positioning satellite, and thus, the time to first fix may be reduced.

As a third aspect of the invention, the invention may be configured as the position calculation method according to the first or second aspect of the invention, wherein the information of the position and the velocity of the positioning satellite contained in the positioning support information is information of the position and the velocity of the positioning satellite at a given time.

According to the third aspect of the invention, the information contained in the received positioning support information is information of single position and velocity. Accordingly, compared to the case where the orbital information (ephemeris or the like) is received from the positioning satellite, for example, the amount of memory for storage of the received information may be reduced.

As a fourth aspect of the invention, the invention may be configured as the position calculation method according to any one of the first to third aspects of the invention, wherein the calculating the orbital information includes calculating the orbital information using an equation of motion expressing motion of a satellite orbiting the earth and the position and the velocity of the positioning satellite contained in the positioning support information.

According to the fourth aspect of the invention, the orbital information of the positioning satellite is calculated using the equation of motion expressing motion of the satellite orbiting the earth and the position and the velocity of the positioning satellite contained in the positioning support information.

As a fifth aspect of the invention, the invention may be configured as the position calculation method according to the fourth aspect of the invention, wherein the positioning support information further contains earth orientation information, the equation of motion is defined by an inertial coordinate system with reference to the earth center, the position and the velocity contained in the positioning support information are defined by a fixed coordinate system with reference to the earth center, and the calculating the orbital information includes coordinate-transforming the position and the velocity contained in the positioning support information into a position and a velocity of the inertial coordinate system using the earth orientation information contained in the positioning support information.

According to the fifth aspect of the invention, the equation of motion expressing the satellite motion near the earth is defined by the inertial coordinate system with reference to the earth center, the position and the velocity contained in the positioning support information are defined by the fixed coordinate system with reference to the earth center. Further, the artificial satellite or the ground communication device transmits the earth orientation information contained in the positioning support information. Accordingly, the calculation of the orbital information of the positioning satellite is performed after the coordinate transformation of the position and the velocity contained in the positioning support information into the position and the velocity of the inertial coordinate system using the earth orientation information contained in the positioning support information.

As a sixth aspect of the invention, the invention may be configured as the position calculation method according to any one of the first to fifth aspects of the invention, wherein the calculating the orbital information includes obtaining a parameter of an ephemeris of the positioning satellite.

According to the sixth aspect of the invention, the parameter of the ephemeris of the positioning satellite is obtained as the orbital information.

As a seventh aspect of the invention, the invention may be configured as a position calculation method including receiving positioning support information containing at least information of a position and a velocity of a positioning satellite from an artificial satellite that transmits the positioning support information, obtaining an orbital function of the positioning satellite using an equation of motion expressing motion of a satellite orbiting the earth and the position and the velocity of the positioning satellite contained in the positioning support information, estimating a satellite position of the positioning satellite using the orbital function, and calculating a position of a receiver using a signal from the positioning satellite and the estimated satellite position of the positioning satellite.

As an eighth aspect of the invention, the invention may be configured as a position calculation method including receiving positioning support information containing at least information of a position and a velocity of a positioning satellite from a ground communication device that transmits the positioning support information, obtaining an orbital function of the positioning satellite using an equation of motion expressing motion of a satellite orbiting the earth and the position and the velocity of the positioning satellite contained in the positioning support information, estimating a satellite position of the positioning satellite using the orbital function, and calculating a position of a receiver using a signal from the positioning satellite and the estimated satellite position of the positioning satellite.

According to the seventh and eighth aspects of the invention, the positioning support information transmitted from the artificial satellite or the ground communication device is received, the orbital function is obtained using the equation of motion expressing the satellite motion near the earth and the position and the velocity of the positioning satellite contained in the received positioning support information, the position of the positioning satellite is estimated using the obtained orbital function, and the position is calculated using the signal from the positioning satellite and the estimated satellite position of the positioning satellite. That is, the satellite position of the positioning satellite is obtained by the positioning support information from the artificial satellite or the ground communication device, and thus, the time to first fix may be reduced.

Brief Description of Drawings

[Fig. 1] Fig. 1 is a configuration diagram of a position calculation apparatus.
[Fig. 2] Fig. 2 is a functional configuration diagram of a baseband processing circuit part.
[Fig. 3] Fig. 3 is a flowchart of baseband processing.
[Fig. 4] Fig. 4 is a flowchart of baseband processing in a modified example.
[Fig. 5] Fig. 5 shows a modified example when the position calculation apparatus receives positioning support information from a ground communication device.

Description of Embodiments

As below, embodiments of the invention will be explained with reference to the drawings. Note that the embodiments to which the invention is applicable are not limited to those.

[Outline]

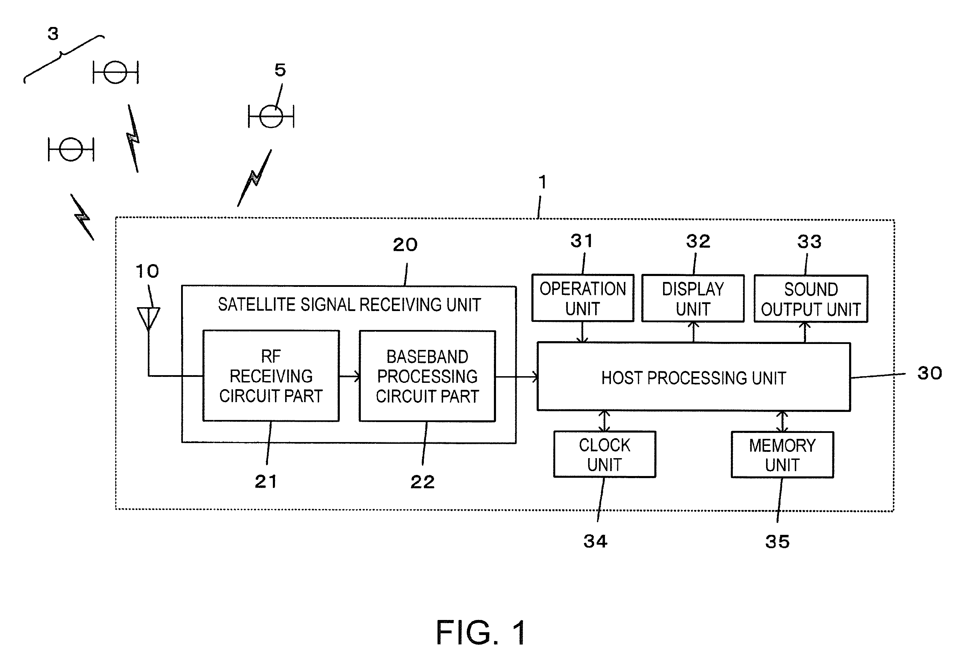

Fig. 1 is a configuration diagram of a position calculation apparatus 1 of the embodiment. The position calculation apparatus 1 is a receiver that receives satellite signals from GPS satellites 3 and a quasi-zenith satellite 5 and calculates the position of the apparatus based on the received satellite signals.

In the embodiment, for the quasi-zenith satellite 5 as an artificial satellite, a satellite of the quasi-zenith satellites system project known as a Japanese satellite positioning system is used. Further, in the embodiment, the quasi-zenith satellite 5 transmits positioning support information as information for supporting GPS positioning as one of messages superimposed on the L1-SAIF signal as a reinforcement signal in the sub-meter order. The positioning support information includes satellite position and velocity information and earth orientation parameters (EOP). The satellite position and velocity information includes positions r0 and velocities v0 at a certain time t0 and clock errors of the respective GPS satellites 3. The earth orientation parameters as earth orientation information include UT1-UTC, length of day (LOD), X-polar motion, X-polar motion velocity, Y-polar motion, and Y-polar motion velocity.

At the first position calculation (first positioning), the position calculation apparatus 1 estimates ephemerides (orbital information) of the GPS satellites 3 using the positioning support information received from the quasi-zenith satellite 5, and performs position calculation (positioning) using the estimated ephemerides. After the first position calculation, the apparatus continuously receives the GPS satellite signals from the GPS satellites 3 and, when the acquisition of the ephemerides contained in the GPS satellite signals is completed, switches the operation to position calculation using the acquired ephemerides. In this manner, reduction of TTFF is realized using the positioning support information from the quasi-zenith satellite 5.

[Principle]

The estimation of the ephemeris of the GPS satellite 3 based on the positioning support information received from the quasi-zenith satellite 5 is explained.

First, regarding the GPS satellite 3, an equation of motion of the following formula (1) holds.

[Formula 1]

$$\ddot{r} = \frac{F}{m} = a(t, \ r)$$

In the formula (1), m is a mass of the GPS satellite 3, F is a force acting on the GPS satellite 3, and r is a position of the GPS satellite 3 at time t. Further, a is an acceleration force acting on the GPS satellite 3 and given by the following formula (2).

[Formula 2]

$$a(t, \ r) = a_g + a_{moon} + a_{sun} + a_{srg}$$

In the formula (2), $a_g$ is acceleration of gravity, $a_{moon}$ is the gravitational pull of the moon, $a_{sun}$ is gravitational pull of the sun, $a_{srg}$ is solar radiation pressure. That is, the equation of motion expressing the motion of the satellite orbiting the earth in outer space is determined by the formula (1) and the formula (2).

Further, the equation of motion of the formula (1) is numerically integrated with the position r(t0) = r0 and the velocity v(t0) = v0 at the time t0 as initial values, and thereby, the position r(t) of the GPS satellite 3 at time t, i.e., an orbital function expressing the satellite orbit is obtained as the following formula (3).

[Formula 3]

$$r(t) = r_0 + \int_{t_0}^{t} \left( v_0 + \int_{t_0}^{t} a(t, \ r) dt \right) dt$$

The initial values given here are the position r0 and the velocity v0 of the GPS satellite 3 at time t0 contained in the positioning support information. If the satellite orbit is obtained, an ephemeris adapting to the satellite orbit may be estimated.

Now, the above described equation of motion expressing the motion of the satellite (formula (1)) is defined in the earth centered inertial (ECI) coordinate system as an inertial coordinate system with reference to the earth center. On the other hand, the position calculated in the position calculation apparatus 1 and the position and the velocity of the GPS satellite 3 contained in the positioning support information transmitted by the quasi-zenith satellite 5 are defined in the earth centered earth fixed (ECEF) coordinate system as a coordinate system fixed to the earth with reference to the earth center.

Accordingly, for estimation of the satellite orbit, coordinate transformation between the earth centered inertial (ECI) coordinate system and the earth centered earth fixed (ECEF) coordinate system is necessary. As well known, a coordinate transformation matrix Q between the earth centered inertial (ECI) coordinate system and the earth centered earth fixed (ECEF) coordinate system is given by the following formulae (4).

$$[\text{Formulae 4}]$$

$$R_{ECEF} = Q R_{ECI}$$

$$Q = [A][B][C][D]$$

In the formulae (4), A is a rotation matrix of polar motion, B is a rotation matrix at the sidereal time, C is a rotation matrix of nutation, and D is a rotation matrix of precession. These matrices A, B, C, D are determined by the time t and the earth orientation parameters (EOP) contained in the positioning support information. In other words, these matrices A, B, C, D are expressed by the earth orientation parameters and the coordinate transformation matrix Q is determined.

[Configuration of Positioning Apparatus]

The position calculation apparatus 1 includes a satellite receiving antenna 10, a satellite signal receiving unit 20, a host processing unit 30, an operation unit 31, a display unit 32, a sound output unit 33, a clock unit 34, and a memory unit 35.

The satellite receiving antenna 10 is an antenna that receives RF (Radio Frequency) signals containing the GPS satellite signals transmitted from the GPS satellites 3 and the quasi-zenith satellite signals (QZS satellite signals) transmitted from the quasi-zenith satellite 5.

The satellite signal receiving unit 20 has an RF receiving circuit part 21 and a baseband processing circuit part 22, and calculates the position of the position calculation apparatus 1 based on the satellite signals received by the satellite receiving antenna 10. Incidentally, the RF receiving circuit part 21 and the baseband processing circuit part 22 may be manufactured as separate LSIs (large scale integrations) or as one chip.

The RF receiving circuit part 21 is a receiving circuit for RF signals. As a circuit configuration, for example, a receiving circuit that converts the RF signals received by the satellite receiving antenna 10 into digital signals using an A/D converter and processes the digital signals may be employed, or the RF signals received by the satellite receiving antenna 10 may be signal-processed as the analog signals and finally A/D-converted, and thereby, the digital signals may be output to the baseband processing circuit part 22.

In the latter case, for example, the RF receiving circuit part 21 may have the following configuration. That is, a predetermined oscillation signal is divided or multiplied, and thereby, an oscillation signal for RF signal multiplication is generated. Then, the RF signal output from the satellite receiving antenna 10 is multiplied by the generated oscillation signal, and thereby, the RF signal is down-converted to an intermediate frequency signal (hereinafter, IF signal), the IF signal is amplified, and then, converted into a digital signal using the A/D converter and output to the baseband processing circuit part 22.

The baseband processing circuit part 22 performs carrier removal, correlation processing, or the like on the signal received in the RF receiving circuit part 21 and captures the GPS satellite signals and the quasi-zenith satellite signals. Then, the part performs predetermined position calculation based on the ephemerides extracted from the captured GPS satellite signals and the positioning support information extracted from the captured quasi-zenith satellite signals, and calculates the position (position coordinates) of the position calculation apparatus 1 and the clock errors.

The host processing unit 30 is realized by a calculation device including a CPU, for example, and generally controls the respective units of the position calculation apparatus 1 according to various programs including a system program stored in the memory unit 35. For example, the unit allows the display unit 32 to display a map on which the current location is indicated based on the position coordinates acquired from the baseband processing circuit part 22, or uses the position coordinates for various kinds of application processing.

The operation unit 31 is an input device including a touch panel and a button switch, and outputs an operation signal in response to the operation to the host processing unit 30.

By the operation of the operation unit 31, various kinds of instruction input including a position calculation request is made.

The display unit 32 is a display device including an LCD, for example, and performs various kinds of display based on display signals input from the host processing unit 30. The sound output unit 33 is a sound output device including a speaker, for example, and performs various kinds of sound output based on sound signals input from the host processing unit 30. The clock unit 34 is an internal clock and includes an oscillator circuit such as a crystal oscillator.

The memory unit 35 is realized by a memory device including a ROM and a RAM, for example, and stores a system program for general control of the position calculation apparatus 1, various programs and data for execution of various kinds of application processing etc.

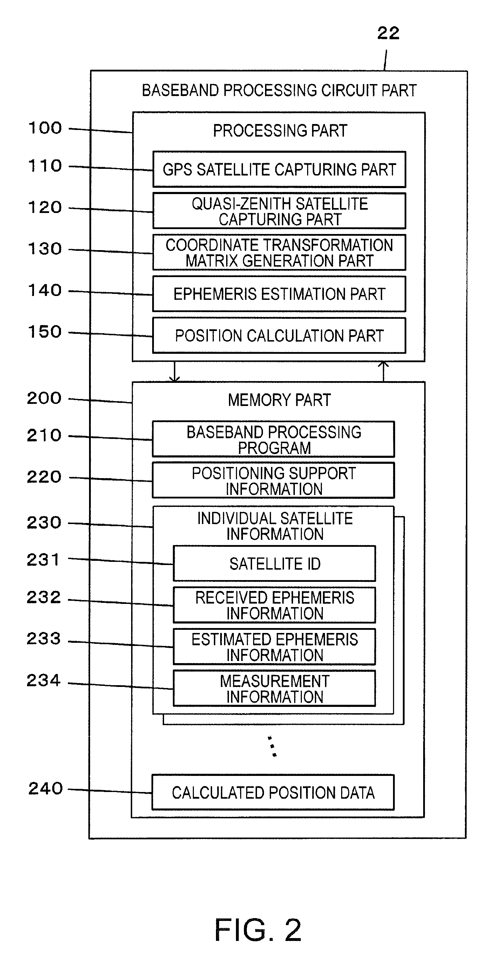

Fig. 2 is a functional configuration diagram of the baseband processing circuit part 22. The baseband processing circuit part 22 includes a processing part 100 and a memory part 200.

The processing part 100 is realized by a calculation device including a CPU and a DSP, for example, and performs overall control of the baseband processing circuit part 22 based on the programs, data, etc. stored in the memory part 200. Further, the processing part 100 has a GPS satellite capturing part 110, a quasi-zenith satellite capturing part 120, a coordinate transformation matrix generation part 130, an ephemeris estimation part 140, a position calculation part 150.

The GPS satellite capturing part 110 captures the GPS satellite signals. First, the part selects GPS satellites (satellites to be captured) as targets of capturing. Specifically, at the current time timed in the clock unit 34, the part determines GPS satellites located in the sky in a given reference position using an almanac, long-term prediction orbit data, etc. acquired in advance as the satellites to be captured. For example, the reference position is a position acquired by server assist at the first position calculation after the power is turned on and the latest calculated position at the second and subsequent position calculation.

Then, the part captures the GPS satellite signals with respect to each satellite to be captured. That is, the part performs correlation calculation on the reception signals output from the RF receiving circuit part 21 using replica C/A codes corresponding to the satellites to be captured, and thereby, captures the satellites to be captured. Then, the part removes carrier with respect to the captured GPS satellite signals, decodes navigation messages contained in the GPS satellite signals, and acquires ephemerides contained in the navigation messages. The acquired ephemerides are stored in the memory part 200 as received ephemeris information 232 of the GPS satellites.

The quasi-zenith satellite capturing part 120 captures the quasi-zenith satellite signals. That is, like the capturing of the GPS satellites by the GPS satellite capturing part 110, the part performs correlation calculation on the reception signals output from the RF receiving circuit part 21 using replica C/A codes corresponding to the quasi-zenith satellite to be captured, and thereby, captures the quasi-zenith satellite. Then, the part removes carrier with respect to the captured quasi-zenith satellite signals and decodes the positioning support information contained in the quasi-zenith satellite signals. The acquired positioning support information is stored as positioning support information 220 in the memory part 200.

The coordinate transformation matrix generation part 130 calculates a coordinate transformation matrix Q between the earth centered inertial (ECI) coordinate system and the earth centered earth fixed (ECEF) coordinate system defined by the formulae (4) using the earth orientation parameters (EOP) contained in the positioning support information 220.

The ephemeris estimation part 140 estimates the ephemerides of the respective GPS satellites 3 based on the positioning support information 220. Specifically, the part transforms the position r0 and the velocity v0 of the GPS satellite contained in the positioning support information 220 from the earth centered earth fixed (ECEF) coordinate system to the earth centered inertial (ECI) coordinate system using the coordinate transformation matrix Q generated by the coordinate transformation matrix generation part 130. Then, the part performs numeric integration on the orbital function r(t) of the formula (3) with the position r0 and the velocity v0 after coordinate transformation as initial values, and thereby, obtains the orbital function r(t) expressing the satellite orbit. Then, the part calculates an ephemeris adapted to the satellite orbit expressed by the orbital function r(t). For example, the calculation of the ephemeris may be obtained by numerical calculation (e.g., least square method) that minimizes the difference between the satellite orbit based on the parameter values of the prescribed ephemeris and the satellite orbit expressed by the orbital function r (t). Obviously, the other methods may be used. Then, the calculated ephemeris is stored as estimated ephemeris information 233 of the corresponding GPS satellite in the memory part 200.

The position calculation part 150 calculates the position of the position calculation apparatus 1. Specifically, after the power is turned on, the part performs position calculation using the estimated ephemeris information 233 of the respective GPS satellites 3 to be captured as the first position calculation. Subsequently, the GPS satellite signals are continuously received from the GPS satellites 3 and the acquisition of the ephemerides of the respective GPS satellite signals to be captured is completed, and the part performs position calculation using the received ephemeris information 232. The calculated positions are accumulated and stored as calculated position data 240 in correspondence with the calculation times, for example, in the memory unit 35.

The memory part 200 is realized by a memory device including a ROM and a RAM, for example, and stores a system program for general control of the baseband processing circuit part 22 using the processing part 100, programs and data for realizing various kinds of functions etc. and is used as a work area of the processing part 100 in which calculation results by the execution of the processing part 100 according to the various programs are temporarily stored. In the embodiment, a baseband processing program 210, the positioning support information 220, individual satellite information 230, and the calculated position data 240 are stored.

The individual satellite information 230 is generated with respect to each GPS satellite 3, and includes a satellite ID 231 for identification of the corresponding GPS satellite 3, the received ephemeris information 232, the estimated ephemeris information 233, and measurement information 234.

[Flow of Processing]

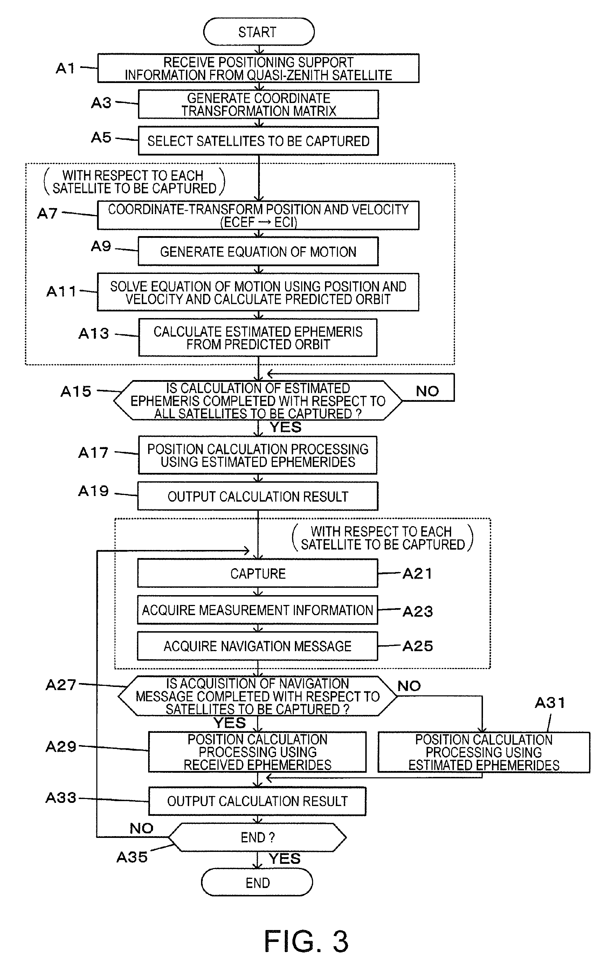

Fig. 3 is a flowchart for explanation of a flow of baseband processing. The processing is realized by the processing part 100 executing the baseband processing program 210.

First, the quasi-zenith satellite capturing part 120 captures the quasi-zenith satellite signal and acquires the positioning support information contained in the captured quasi-zenith satellite signal (step A1). Then, the coordinate transformation matrix generation part 130 generates the coordinate transformation matrix Q between the earth centered inertial (ECI) coordinate system and the earth centered earth fixed (ECEF) coordinate system using the acquired earth orientation parameters (EOP) (step A3). Subsequently, the GPS satellite capturing part 110 selects the GPS satellites to be captured (step A5).

Then, the ephemeris estimation part 140 performs orbit estimation processing on the respective selected satellites to be captured in parallel. In the orbit estimation processing, first, the position r0 and the velocity v0 of the corresponding GPS satellite contained in the acquired capture support information is coordinate-transformed using the coordinate transformation matrix Q (step A7). Then, the equation of motion with respect to the GPS satellite is generated (step A9), the equation of motion is numerically integrated with the position r0 and the velocity v0 after the coordinate transformation as initial values, and thereby, a predicted satellite orbit of the GPS satellite is calculated (step A11). Then, an estimated ephemeris is calculated from the predicted satellite orbit (step A13).

If the calculation of the estimated ephemeris is completed with respect to all satellites to be captured (step A15: YES), position calculation using the estimated ephemerides is performed and the position of the position calculation apparatus 1 is calculated (step A17). Specifically, the positions of the GPS satellites 3 to be captured are specified using the estimated ephemerides, and the current position of the position calculation apparatus 1 is calculated from the satellite positions and the pseudo ranges based on the received GPS satellite signals. Then, the calculated position is output for display on the display unit 32, for example (step A19).

Subsequently, capturing processing on the respective satellites to be captured is performed in parallel. In the capturing processing, the corresponding GPS satellite signals are captured (step A21). Then, the measurement information (code phases and reception frequencies) of the captured GPS satellites are acquired (step A23), and then, decoding of the navigation messages is performed (step A25).

If the acquisition of the navigation messages is completed with respect to the satellites to be captured (step A27: YES), position calculation using the ephemerides contained in the acquired navigation messages is performed, and thereby, the position of the position calculation apparatus 1 is calculated (step A29). On the other hand, if the acquisition of the navigation messages is not completed (step A27 : NO), position calculation using the estimated ephemerides is performed (step A31). Then, the calculated position is output for display on the display unit 32, for example (step A33).

Then, the processing part 100 determines whether or not to end the processing. If the part does not end the processing (step A35: NO), the part returns to step A21. If the part ends the processing (step A35: YES), the part ends the baseband processing.

[Advantages]

As described above, the position calculation apparatus 1 of the embodiment receives the positioning support information superimposed on the quasi-zenith satellite signal transmitted by the quasi-zenith satellite 5 at the first position calculation without ephemerides, predicts the satellite orbits of the GPS satellites 3 based on the positions and velocities of the GPS satellites 3 contained in the positioning support information, and performs position calculation using the ephemerides estimated from the predicted satellite orbits. Thereby, the position calculation using the positioning support information received from the quasi-zenith satellite 5 may be performed without waiting for the acquisition of the ephemerides from the GPS satellite signals transmitted by the GPS satellites 3, and thus, the time to first fix (TTFF) may be reduced.

[Modified Examples]

The embodiments to which the invention is applicable are not limited to the above described embodiment and, obviously, changes may be appropriately made without departing from the scope of the invention.

(A) Position Calculation of GPS Satellites

In the above described embodiment, the satellite orbits (orbital functions r(t)) of the GPS satellites are obtained from the positioning support information and the ephemerides representing the satellite orbits are estimated. However, the positions of the GPS satellites 3 may be directly obtained from the satellite orbits (orbital functions r(t)) and the position calculation may be performed using the satellite positions.

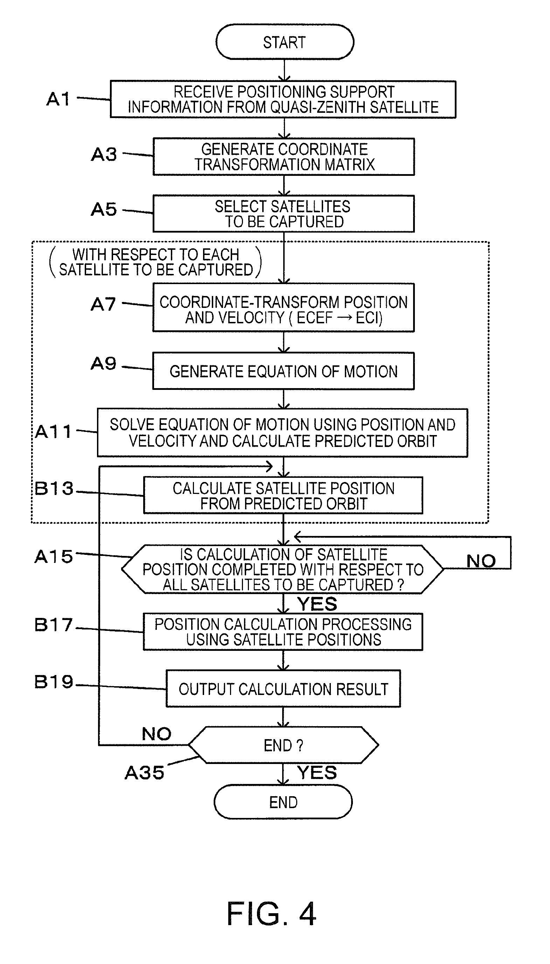

Specifically, as shown in Fig. 4, regarding the satellites to be captured, when the predicted satellite orbits (i.e., the orbital functions r(t) expressing the satellite orbits) are calculated (step A11), the positions of the GPS satellites at a given time t are calculated from the predicted orbits (step B13). If the satellite position is calculated with respect to all satellites to be captured (step B15: YES), position calculation using the satellite positions is performed, and thereby, the position of the position calculation apparatus 1 at the given time t is calculated (step B17). Then, the calculated position is output for display on the display unit 32, for example (step B19). Then, the processing part 100 determines whether or not to end the processing. If the part does not end the processing (step A35 : NO), the part returns to step B13. If the part ends the processing (step A35: YES), the part ends the baseband processing.

According to the modified example, it is not necessary to calculate the estimated ephemerides from the predicted orbits or continuously receive the GPS satellite signals to acquire the ephemerides.

(B) Positioning Support Information

Further, in the above described embodiment, the example in which the positioning support information contains a single piece of position information and a single piece of velocity information of the position r0 and the velocity v0 at a certain time t0 is explained, however, the information may contain position information and velocity information at a plurality of times.

(C) Satellite Positioning System

Furthermore, in the above described embodiment, the example of the position calculation apparatus that acquires the ephemerides of the GPS satellites to perform position calculation is explained, however, the other satellite positioning systems including WAAS (Wide Area Augmentation System), GLONASS (GLObal Navigation Satellite System), and GALILEO may be employed.

(D) Artificial Satellite

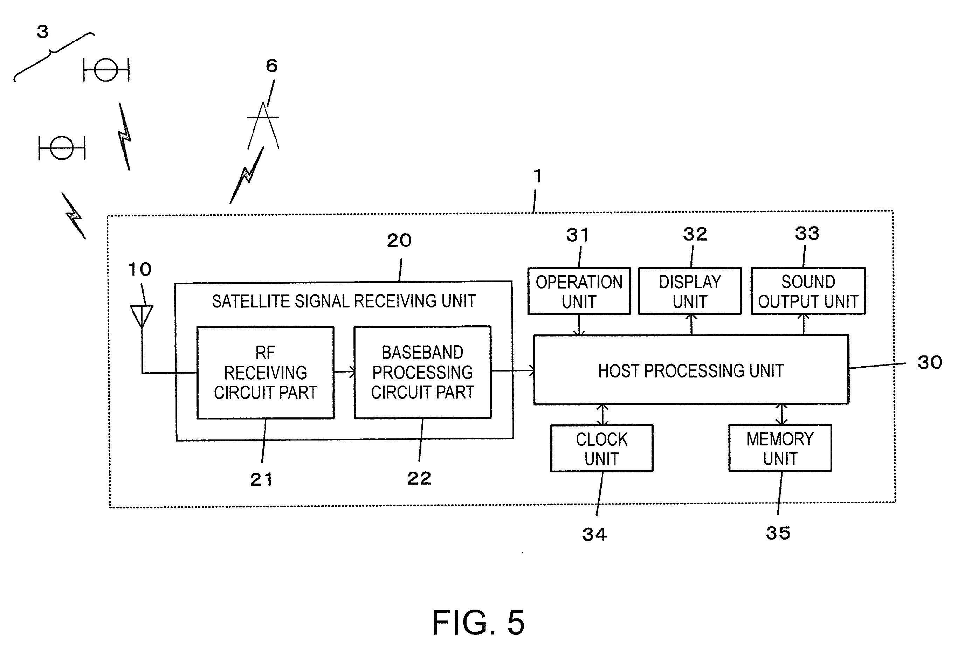

In addition, in the above described embodiment, the artificial satellite is the quasi-zenith satellite, however, the satellite may be a geostationary satellite. When the area where the position calculation apparatus 1 is used is an area near the equator, the geostationary satellite is preferable. Further, though the reception range is limited, obviously, an apparatus on the earth (ground) may be substituted for the satellite. For example, as shown in Fig. 5, a ground communication device 6 including an IMES (Indoor MEssaging System), a server device internally or externally having a transmission function, and a base station for cell phone and data communications may be employed. In this case, it is preferable that the ground communication device 6 may be adapted to perform transmission in the same transmission system as that of the above described artificial satellite (transmission protocol, transmission frequency, modulation system, or the like). If the transmission is performed in different transmission system, it is necessary that the position calculation apparatus 1 has a receiving function compliant to the transmission system.

Reference Signs List

1 position calculation apparatus, 3 GPS satellite, 5 quasi-zenith satellite, 10 satellite receiving antenna, 20 satellite signal receiving unit, 30 host processing unit, 31 operation unit, 32 display unit, 33 sound output unit, 34 clock unit, 35 memory unit.

**Claims**

1. A position calculation method comprising:

   receiving positioning support information containing at least information of a position and a velocity of a positioning satellite from an artificial satellite that transmits the positioning support information;
   calculating orbital information of the positioning satellite using the positioning support information; and
   calculating a position of a receiver using a signal from the positioning satellite and the orbital information.

2. A position calculation method comprising:

   receiving positioning support information containing at least information of a position and a velocity of a positioning satellite from a ground communication device that transmits the positioning support information;
   calculating orbital information of the positioning satellite using the positioning support information; and
   calculating a position of a receiver using a signal from the positioning satellite and the orbital information.

3. The position calculation method according to claim 1 or 2, wherein the information of the position and the velocity of the positioning satellite contained in the positioning support information is information of the position and the velocity of the positioning satellite at a given time.

4. The position calculation method according to any one of claims 1 to 3, wherein the calculating the orbital information includes calculating the orbital information using an equation of motion expressing motion of a satellite orbiting the earth and the position and the velocity of the positioning satellite contained in the positioning support information.

5. The position calculation method according to claims 4, wherein the positioning support information further contains earth orientation information,
the equation of motion is defined by an inertial coordinate system with reference to the earth center,
the position and the velocity contained in the positioning support information are defined by a fixed coordinate system with reference to the earth center, and
the calculating the orbital information includes coordinate-transforming the position and the velocity contained in the positioning support information into a position and a velocity of the inertial coordinate system using the earth orientation information contained in the positioning support information.

6. The position calculation method according to any one of claims 1 to 5, wherein the calculating the orbital information includes obtaining a parameter of an ephemeris of the positioning satellite.

7. A position calculation method comprising:

receiving positioning support information containing at least information of a position and a velocity of a positioning satellite from an artificial satellite that transmits the positioning support information;
obtaining an orbital function of the positioning satellite using an equation of motion expressing motion of a satellite orbiting the earth and the position and the velocity of the positioning satellite contained in the positioning support information;
estimating a satellite position of the positioning satellite using the orbital function; and
calculating a position of a receiver using a signal from the positioning satellite and the estimated satellite position of the positioning satellite.

8. A position calculation method comprising:

receiving positioning support information containing at least information of a position and a velocity of a positioning satellite from a ground communication device that transmits the positioning support information;
obtaining an orbital function of the positioning satellite using an equation of motion expressing motion of a satellite orbiting the earth and the position and the velocity of the positioning satellite contained in the positioning support information;
estimating a satellite position of the positioning satellite using the orbital function; and
calculating a position of a receiver using a signal from the positioning satellite and the estimated satellite position of the positioning satellite.

9. A position calculation apparatus comprising:

a receiving unit that receives positioning support information containing at least information of a position and a velocity of a positioning satellite from an artificial satellite that transmits the positioning support information;
an orbital information calculation unit that calculates orbital information of the positioning satellite using the positioning support information; and
a position calculation unit that calculates a position using a signal from the positioning satellite and the orbital information.

10. A position calculation apparatus comprising:

a receiving unit that receives positioning support information containing at least information of a position and a velocity of a positioning satellite from a ground communication device that transmits the positioning support information;
an orbital information calculation unit that calculates orbital information of the positioning satellite using the positioning support information; and
a position calculation unit that calculates a position using a signal from the positioning satellite and the orbital information.

FIG. 1

EP 2 881 758 A1

22

BASEBAND PROCESSING CIRCUIT PART

100 — PROCESSING PART

110 — GPS SATELLITE CAPTURING PART

120 — QUASI-ZENITH SATELLITE CAPTURING PART

130 — COORDINATE TRANSFORMATION MATRIX GENERATION PART

140 — EPHEMERIS ESTIMATION PART

150 — POSITION CALCULATION PART

200 — MEMORY PART

210 — BASEBAND PROCESSING PROGRAM

220 — POSITIONING SUPPORT INFORMATION

230 — INDIVIDUAL SATELLITE INFORMATION

231 — SATELLITE ID

232 — RECEIVED EPHEMERIS INFORMATION

233 — ESTIMATED EPHEMERIS INFORMATION

234 — MEASUREMENT INFORMATION

⋮

240 — CALCULATED POSITION DATA

FIG. 2

```
                        ┌──────────────┐
                        │    START     │
                        └──────┬───────┘
                               ↓
A1 ─────┌──────────────────────────────────────────────┐
        │   RECEIVE POSITIONING SUPPORT                 │
        │   INFORMATION FROM QUASI-ZENITH SATELLITE     │
        └──────────────────────┬───────────────────────┘
                               ↓
A3 ─────┌──────────────────────────────────┐
        │   GENERATE COORDINATE             │
        │   TRANSFORMATION MATRIX           │
        └──────────────┬───────────────────┘
                       ↓
A5 ─────┌──────────────────────────────────┐
        │   SELECT SATELLITES TO BE CAPTURED │
        └──────────────┬───────────────────┘
```

( WITH RESPECT TO EACH
  SATELLITE TO BE CAPTURED )

```
A7 ─────┌──────────────────────────────────────────────┐
        │   COORDINATE-TRANSFORM POSITION AND VELOCITY  │
        │   (ECEF → ECI)                                │
        └──────────────────────┬───────────────────────┘
                               ↓
A9 ─────┌──────────────────────────────────┐
        │   GENERATE EQUATION OF MOTION     │
        └──────────────┬───────────────────┘
                       ↓
A11 ────┌──────────────────────────────────────────────┐
        │   SOLVE EQUATION OF MOTION USING POSITION AND │
        │   VELOCITY AND CALCULATE PREDICTED ORBIT      │
        └──────────────────────┬───────────────────────┘
                               ↓
A13 ────┌──────────────────────────────────┐
        │   CALCULATE ESTIMATED EPHEMERIS   │
        │   FROM PREDICTED ORBIT            │
        └──────────────┬───────────────────┘
```

```
A15 ────< IS CALCULATION OF ESTIMATED            > ── NO
          EPHEMERIS COMPLETED WITH RESPECT TO
          ALL SATELLITES TO BE CAPTURED ?
                       │ YES
                       ↓
A17 ────┌──────────────────────────────────┐
        │   POSITION CALCULATION PROCESSING │
        │   USING ESTIMATED EPHEMERIDES     │
        └──────────────┬───────────────────┘
                       ↓
A19 ────┌──────────────────────────────────┐
        │   OUTPUT CALCULATION RESULT       │
        └──────────────┬───────────────────┘
```

( WITH RESPECT TO EACH
  SATELLITE TO BE CAPTURED )

```
        ┌──────────────────────────────────┐
        │            CAPTURE                │──A21
        └──────────────┬───────────────────┘
                       ↓
        ┌──────────────────────────────────┐
        │   ACQUIRE MEASUREMENT INFORMATION │──A23
        └──────────────┬───────────────────┘
                       ↓
        ┌──────────────────────────────────┐
        │   ACQUIRE NAVIGATION MESSAGE      │──A25
        └──────────────┬───────────────────┘
```

```
A27 ────< IS ACQUISITION OF NAVIGATION           > ── NO
          MESSAGE COMPLETED WITH RESPECT TO
          SATELLITES TO BE CAPTURED ?
                       │ YES                              A31
                       ↓                                   │
A29 ────┌──────────────────────────┐   ┌──────────────────────────┐
        │   POSITION CALCULATION    │   │   POSITION CALCULATION    │
        │   PROCESSING USING        │   │   PROCESSING USING        │
        │   RECEIVED EPHEMERIDES    │   │   ESTIMATED EPHEMERIDES   │
        └────────────┬─────────────┘   └──────────────────────────┘
                     ↓
A33 ────┌──────────────────────────────────┐
        │   OUTPUT CALCULATION RESULT       │
        └──────────────┬───────────────────┘
                       ↓
     NO <            END ?            >
A35 ───                │ YES
                       ↓
                ┌──────────────┐
                │     END      │
                └──────────────┘
```

# FIG. 3

START

A1 — RECEIVE POSITIONING SUPPORT
INFORMATION FROM QUASI-ZENITH SATELLITE

A3 — GENERATE COORDINATE
TRANSFORMATION MATRIX

A5 — SELECT SATELLITES
TO BE CAPTURED

$\left(\begin{array}{c}\text{WITH RESPECT TO EACH}\\\text{SATELLITE TO BE CAPTURED}\end{array}\right)$

A7 — COORDINATE-TRANSFORM POSITION
AND VELOCITY ( ECEF → ECI)

A9 — GENERATE EQUATION OF MOTION

A11 — SOLVE EQUATION OF MOTION USING POSITION AND
VELOCITY AND CALCULATE PREDICTED ORBIT

B13 — CALCULATE SATELLITE POSITION
FROM PREDICTED ORBIT

A15 — IS CALCULATION OF SATELLITE
POSITION COMPLETED WITH RESPECT TO
ALL SATELLITES TO BE CAPTURED ?      NO

YES

B17 — POSITION CALCULATION PROCESSING
USING SATELLITE POSITIONS

B19 — OUTPUT CALCULATION RESULT

NO      END ?

A35      YES

END

FIG. 4

13

FIG. 5

## INTERNATIONAL SEARCH REPORT

| International application No. |
| --- |
| PCT/JP2013/003885 |

A. CLASSIFICATION OF SUBJECT MATTER
*G01S19/27*(2010.01)i, *G01S19/25*(2010.01)i, *G01S19/42*(2010.01)i

According to International Patent Classification (IPC) or to both national classification and IPC

B. FIELDS SEARCHED

Minimum documentation searched (classification system followed by classification symbols)
G01S19/00-19/55

Documentation searched other than minimum documentation to the extent that such documents are included in the fields searched
Jitsuyo Shinan Koho            1922-1996   Jitsuyo Shinan Toroku Koho   1996-2013
Kokai Jitsuyo Shinan Koho      1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-47922 A  (Mediatek Inc.),<br>10 March 2011 (10.03.2011),<br>paragraphs [0014], [0019], [0027], [0029]<br>& EP 2063284 A2<br>paragraphs [0016], [0017], [0022], [0031],<br>[0033]<br>& US 2009/0135061 A1    & DE 102010000009 A<br>& CN 101446628 A        & TW 200923394 A | 1,3-7,9<br>2,8,10 |

| ☒ | Further documents are listed in the continuation of Box C. | | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    30 August, 2013 (30.08.13) | Date of mailing of the international search report<br>    10 September, 2013 (10.09.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2013/003885 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2011-503554 A  (RX Networks Inc.),<br>27 January 2011 (27.01.2011),<br>claim 1; paragraphs [0015], [0051], [0052]<br>& WO 2009/059429 A1<br>claim 1; page 5, line 20 to page 7, line 6;<br>page 14, lines 1 to 26<br>& US 2009/0237302 A1    & EP 2215493 A<br>& AU 2008324686 A        & CA 2705027 A<br>& KR 10-2010-0094499 A | 1,3,5,9,<br>2,4,6-8,10 |
| Y | JP 2005-233677 A  (Matsushita Electric<br>Industrial Co., Ltd.),<br>02 September 2005 (02.09.2005),<br>paragraph [0016]<br>(Family: none) | 2,8,10 |
| A | JP 2012-502298 A  (California Institute of<br>Technology),<br>26 January 2012 (26.01.2012),<br>entire text; all drawings<br>& US 2010/0060518 A1    & EP 2324371 A<br>& WO 2010/047875 A2     & KR 10-2011-0059871 A<br>& CN 102209911 A | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAKAI TAKAYASU.** Transmitting Orbital Parameters to Reduce Time to First Fix (TTFF) of GPS, IEICE TRANSACTIONS on Communications. *The Institute of Electronics, Information and Communication Engineers,* April 2008, vol. J91-B (4), 479-486